Europäisches Patentamt

European Patent Office

Office européen des brevets

(19)

(11) Veröffentlichungsnummer : **0 139 901**
**B1**

(12) # EUROPÄISCHE PATENTSCHRIFT

(45) Veröffentlichungstag der Patentschrift :
03.12.86

(21) Anmeldenummer : 84109071.5

(22) Anmeldetag : 01.08.84

(51) Int. Cl.⁴ : **B 05 D 3/12**, B 29 C 59/02,
B 05 C 19/00, B 05 D 1/14,
B 05 D 1/16

(54) Verfahren und Vorrichtung zum Herstellen von strukturierten, beflockten Oberflächen.

(30) Priorität : 24.08.83 DE 3330493

(43) Veröffentlichungstag der Anmeldung :
08.05.85 Patentblatt 85/19

(45) Bekanntmachung des Hinweises auf die Patenterteilung : 03.12.86 Patentblatt 86/49

(84) Benannte Vertragsstaaten :
AT BE CH FR GB IT LI LU NL SE

(56) Entgegenhaltungen :
DE-A- 3 102 374
DE-B- 1 085 795

(73) Patentinhaber : FLACHGLAS AKTIENGESELLSCHAFT
Otto-Seeling-Promenade 10-14
D-8510 Fürth (DE)

(72) Erfinder : Irrlitz, Hans-Ulrich
Birkenweg 7
D-8481 Schwarzenbach (DE)
Erfinder : Kick, Werner
Etzenrichter Strasse 21
D-8480 Weiden (DE)
Erfinder : Sommer, Hans
Forstweg 6
D-8481 Schirmitz (DE)

(74) Vertreter : Tergau, Enno et al
Tergau & Pohl Patentanwälte Hefnersplatz 3 Postfach 9347
D-8500 Nürnberg 11 (DE)

## Beschreibung

Die Erfindung betrifft ein Verfahren zum Herstellen von leicht und unregelmäßig strukturierten, beflockten Oberflächen durch Beschichten der Oberfläche mit Klebstoff, Beflocken mit kurzen Textilfasern, vorzugsweise im elektrischen Feld, so daß die Textilfasern in senkrechter oder annähernd senkrechter Stellung aufgebracht werden, Aushärten des Klebstoffes und mechanischer Deformation der Flockschicht, die derart durchgeführt wird, daß die Textilfasern umgebogen werden und in der umgebogenen Lage liegen bleiben.

Ein derartiges Verfahren ist in der deutschen Patentschrift 10 85 795 beschrieben. Es soll zur Herstellung von moireartigen Musterungen dienen, wobei so vorgegangen wird, daß die beflockten Flächen, deren Klebstoff also bereits ausgehärtet ist, mit wasserfestmachenden Lösungen befeuchtet und dann die Fäserchen an einzelnen Stellen durch Aufdrücken eines Preßorganes unter gleichzeitiger Drehung umgelegt und die Gebilde alsdann (erneut) getrocknet werden. Als Trägerbahnen für die Flockschicht werden dort Flächengebilde aus Textilfasern oder dgl. genannt, also beispielsweise Textilstoffe, Vliesstoffe oder dergleichen. Es wurde festgestellt, daß aber auch andere Oberflächen bearbeitet werden können, beispielsweise Kunststoffolien, Platten aus geeigneten Werkstoffen und dergleichen. Wesentlich für den Erfolg des Verfahrens ist die Auswahl der Faserflocken. In der Deutschen Patentschrift 10 85 795 wird empfohlen, Kunstseidefasern einzusetzen, welche etwas länger sind, als die bis dahin zur Beflockung von Textilien verwendeten Fäserchen, deren Länge im allgemeinen nicht mehr als 1,5 mm betrug. Für die Herstellung von moireartigen Musterungen sollen demgegenüber Fasern verwendet werden, deren Länge etwa 3 mm oder auch etwas mehr beträgt.

Das vorbekannte Verfahren eignet sich lediglich zur Herstellung verhältnismäßig grober Strukturen. Sollen feinere Strukturen erzeugt werden, wie etwa bei der Herstellung wildlederartiger Oberflächen, so sind längere Fasern ungeeignet, und es ist erforderlich, in Abwendung von den vorbekannten Empfehlungen sogar besonders kurze Fasern einzusetzen. Diese wiederum lassen sich nach den vorbekannten Verfahren nicht mehr deformieren, so daß die feinen Changiereffekte des Wildleders nach diesen Verfahren nicht erzeugt werden können.

Der Erfindung liegt die Aufgabe zugrunde, die vorbekannten Verfahren zum Herstellen strukturierter, beflockter Oberflächen weiterzuentwickeln, so daß auch feiner strukturierte Oberflächen, beispielsweise mit wildlederartigem Aussehen, erzeugt werden können.

Zur Lösung dieser Aufgabe wird vorgeschlagen, daß die Flockschicht durch Aufprallenlassen einer Vielzahl von Kugeln aus rückprallelastischem Werkstoff deformiert wird. Besonders vorteilhaft ist es, wenn die Flockschicht aus regenerierter Zellulose mit einer Faserlänge von 0,35-0,90 mm, vorzugsweise 0,50 mm, besteht und wenn Kugeln aus rückprallelastischem Werkstoff verwendet werden mit einer Shore-A-Härte von 50°-70° ShA. Unter Shore-A-Härte nach DIN 53 505 wird dabei der im Shore-Apparat gemessene Rückprallwert verstanden, der unter Verwendung einer stumpfen Meß-Spitze aus Stahl und einem Fallgewicht von 200 g ermittelt worden ist. Kugeln dieser Art können aus einer Werkstoffkombination aus Polyethylen niedriger Dichte, Polyvinylacetat und einem Ionomer bestehen. Unter dem Ausdruck « Ionomer » werden thermoplastische Copolymere aus Ethylen mit karboxylgruppenhaltigen Monomeren verstanden, wobei ein Teil der Karboxylgruppen in freier Form vorliegt und der Rest durch Metalle der Alkali- oder Erdalkaligruppe abgesättigt ist. Die Behandlungszeit der Flockschicht sollte 10-20 Sekunden, z. B. 15 Sekunden betragen.

Des weiteren wird eine Vorrichtung zur Durchführung des Verfahrens angegeben, welche im wesentlichen durch folgende Merkmale gekennzeichnet ist :

a) Einer Trägerbahn für die zu behandelnden, oberflächlich beflockten Teile, beispielsweise einer oberflächlich beflockten Materialbahn ;

b) unterhalb der Trägerbahn befindet sich eine Vibrator-Anordnung, welche die Trägerbahn mitsamt der darauf angeordneten Materialbahn oder der darauf angeordneten Teile in Schwingungen versetzt ;

c) oberhalb der Trägerbahn und der darauf angeordneten Materialbahn (oder der Teile) befindet sich eine Behandlungs-Kammer mit seitlichen Begrenzungswänden sowie einer Pralldecke ;

d) innerhalb der Behandlungs-Kammer befindet sich eine Vielzahl von Kugeln aus rückprallelastischem Werkstoff.

Die Vibrator-Anordnung sollte vorzugsweise ein elektromagnetischer Rüttler mit einer Arbeitsfrequenz von 20-50 Hz sein. Anstelle eines derartigen elektromagnetischen Rüttlers können aber auch andere Einrichtungen verwendet werden, beispielsweise Mehrkantprofile, die in Laufrichtung der Trägerbahn hintereinander angeordnet sind und die sich quer zur Laufrichtung der Trägerbahn erstrecken. Die Mehrkantprofile müssen dabei um ihre Längsachse drehbar sein, so daß sie beim Drehen mit ihren Kanten gegen die Trägerbahn stoßen und diese, ähnlich wie der zuvor genannte Vibrator, in Schwingungen versetzen.

Vorzugsweise soll die Behandlungs-Kammer in mehrere in Laufrichtung der Trägerbahn hintereinander angeordnete Teilkammern unterteilt sein. In jeder Teilkammer sollen sich dabei mehrere Kugeln befinden. Die Kugeln haben vorzugsweise einen Durchmesser von 35-50 mm und ein Gewicht von 40-60 g. Als bevorzugte Ausführungsform wird vorgeschlagen, daß die gesamte Behandlungs-Kammer eine Länge von 1 000 mm, eine Breite von 1 800 mm und eine Höhe von 60 mm aufweist, daß sie über die Länge in 5 Teilkammern unterteilt ist und daß jede Teilkammer etwa 80 Kugeln enthält.

Die Erfindung wird im folgenden anhand der beigefügten Zeichnung näher erläutert. Es stellen dar :

Figur 1 ein schematischer Längsschnitt durch eine Ausführungsform mit Behandlungs-Kammer und elektromagnetischem Vibrator ;

Figur 2 ein schematischer Längsschnitt durch eine andere Ausführungsform, bei der der elektromagnetische Vibrator durch eine Anzahl von Mehrkantprofilen ersetzt ist.

Die in der Zeichnung dargestellte Vorrichtung weist jeweils eine Trägerbahn 1 auf, bei der es sich um ein Gewebeband, ein Kunststoffband oder dgl. handeln kann. Die Trägerbahn 1 bildet eine endlose Schlaufe, die im dargestellten Ausführungsbeispiel über drei Umlenkwalzen 2, 3 und 4 geführt ist, von denen wenigstens eine durch nichtdargestellte Mittel angetrieben wird.

Auf dem oberen, nahezu horizontal geführten Trumm der Trägerbahn ist diese mit einer Materialbahn 5 belegt. Bei dieser Materialbahn handelt es sich um einen Textilstoff, einen Vliesstoff, einen Kunststoff oder ähnliches, wobei die Materialbahn bereits eine Flockenschicht 6 aufweist. Bei den Flocken dieser Schicht handelt es sich vorzugsweise um solche aus regenerierter Zellulose mit einer Faserlänge von 0,35-0,90 mm, vorzugsweise von 0,5 mm. Die Fasern (Flocken) sind vorzugsweise im elektrostatischen Feld aufgebracht worden, so daß sie im wesentlichen senkrecht oder doch wenigstens annähernd senkrecht zur Materialbahn 5 stehen. Die Fasern sind in an sich bekannter Weise von einer Klebstoffschicht festgehalten, welche unmittelbar vor dem Beflocken auf die Materialbahn aufgebracht, beispielsweise aufgerakelt oder aufgesprüht worden ist. Die Klebstoffschicht ist bereits ausgehärtet, überschüssige Flocken sind durch Saugen und/ oder Bürsten von der Oberfläche entfernt, so daß auf die Trägerbahn 1 eine Materialbahn 5 aufläuft, welche schon als fertig beflocktes, sauberes Band anzusprechen ist.

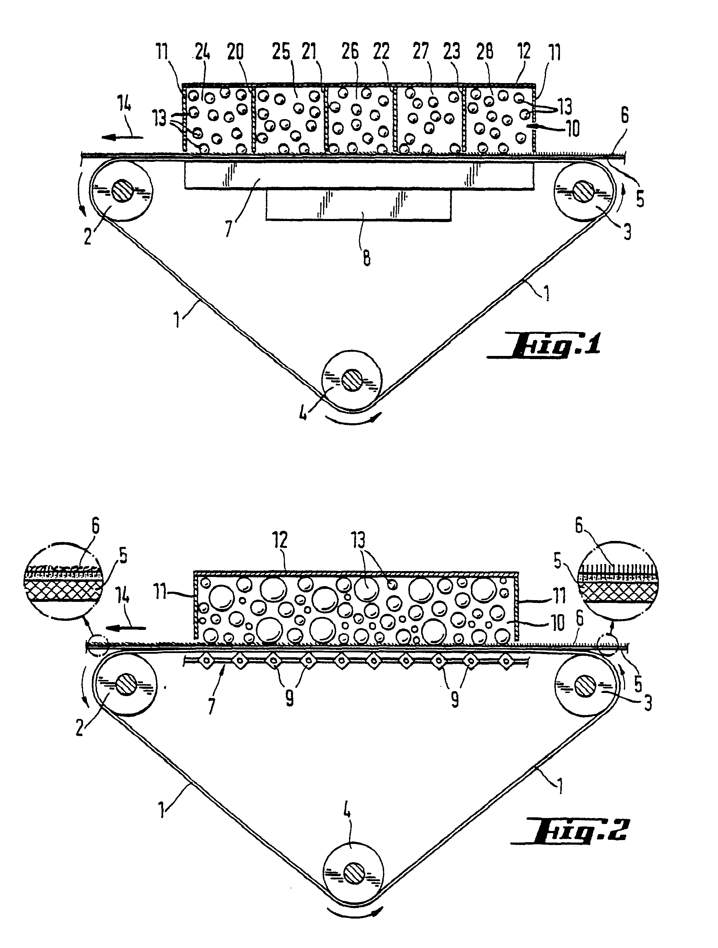

Bei der in der Zeichnung dargestellten Vorrichtung befindet sich unterhalb des oberen, nahezu horizontal geführten Trumms der Trägerbahn 1 eine Vibrator-Anordnung 7. Diese Vibrator-Anordnung muß dazu geeignet sein, die Trägerbahn mitsamt der darauf angeordneten Materialbahn in kräftige Schwingungen zu versetzen. Bei der in Fig. 1 dargestellten Ausführungsform handelt es sich bei der Vibrator-Anordnung 7 um einen an sich bekannten elektromagnetischen Rüttler, dessen Arbeitsfrequenz auf 20-50 Hz einstellbar ist. Der Rüttler ist von einem Trägerpodest 8 unterstützt, welches in der Zeichnung nur symbolisch dargestellt ist.

Bei der in Fig. 2 dargestellten Ausführungsform besteht die Vibrator-Anordnung 7 aus zahlreichen Mehrkant-Profilstäben 9, deren Längsrichtung sich quer zur Laufrichtung der Trägerbahn 1 und der Materialbahn 5 erstreckt. Die Mehrkant-Profilstäbe 9 können durch nichtdargestellte Mittel in Umdrehung versetzt werden, wobei dann die Kanten der Profilstäbe gegen die Unterseite der Trägerbahn stoßen und diese je nach Umdrehungsgeschwindigkeit ebenfalls in Vibration versetzen. Auch hier ist es zweckmäßig, die Umdrehungsgeschwindigkeit regelbar zu machen, so daß die Vibrationsfrequenz in gewissen Grenzen eingestellt werden kann.

Oberhalb der Trägerbahn 1 und der darauf angeordneten Materialbahn 5 befindet sich eine Behandlungs-Kammer 10 mit seitlichen Begrenzungswänden 11 sowie einer Pralldecke 12. Die Behandlungs-Kammer 10 muß verhältnismäßig stabil ausgeführt sein, da sie erheblichen Belastungen ausgesetzt ist.

Die in Fig. 1 dargestellte Behandlungs-Kammer ist durch Querwände 20-23 in fünf etwa gleich große Kammern 24-28 aufgeteilt.

Innerhalb der Behandlungs-Kammer 10 befindet sich eine Vielzahl von Kugeln 13 aus rückprallelastischem Werkstoff. Die Kugeln können, wie bei Fig. 2 gezeichnet, unterschiedlichen Durchmesser haben ; es ist aber auch möglich und wird in vielen Fällen sogar bevorzugt, ihnen gleichen Durchmesser zu geben, wie dies aus Fig. 1 ersichtlich ist.

Beim Betrieb der Vorrichtung wird die Trägerbahn 1 in Umlauf gesetzt ; sie fördert dann die Materialbahn 5 in Richtung des Pfeiles 14 durch die Behandlungs-Kammer 10. Gleichzeitig wird die Vibrator-Anordnung 7 eingeschaltet, so daß die Trägerbahn 1 und die darauf angeordnete Materialbahn 5 in kräftige Schwingungen versetzt werden. Infolge dieser Schwingungen werden die Kugeln 13 nach oben geschleudert ; sie prallen alsbald gegen die Pralldecke 12 und werden infolge ihrer rückprallelastischen Eigenschaften zurück auf die Materialbahn 5 geworfen. Die Kugeln springen mit großer Wucht innerhalb der Behandlungs-Kammer auf und ab, so daß die Flockenschicht 6 auf der Materialbahn 5 einem intensiven Bombardement ausgesetzt ist.

Die in Fig. 1 gezeigte Unterteilung der Behandlungs-Kammer in mehrere Teilkammern stabilisiert die Bahnen, die die Kugeln zurücklegen, so daß diese stets senkrecht auf die Flockenschicht 6 aufprallen.

Ist die Arbeitsfrequenz der Vibrator-Anordnung 7 einstellbar, so kann durch Veränderung der Frequenz, beispielsweise innerhalb eines Frequenzbereiches von 20-50 Hz diese auf die Resonanzfrequenz der hin und herspringenden Kugeln eingestellt werden. Dadurch läßt sich erreichen, daß ein fortwährendes und weitgehend gleichmäßiges Bombardieren der Flockenschicht 6 bei minimalem Energieaufwand erzielt wird. Die Fördergeschwindigkeit der Trägerbahn 1 in Richtung des Pfeiles 14 wird vorzugsweise so eingestellt, daß die Behandlungszeit, welche die Materialbahn 5 in der Behandlungs-Kammer 10 erfährt, 10-20 Sek. erfährt. Bei diesem zwar nur kurz andauernden aber intensiven Bombardement der Flockenschicht werden die ursprünglich etwa senkrecht stehenden Fäserchen der Flockschicht umgebogen und, bei richtiger Auswahl der Faserart, diese mechanisch so weit deformiert, daß das Rückstellvermögen der Fasern nicht ausreicht, um sich wieder aufzurichten. Die Fäserchen bleiben also in der umgebogenen Lage liegen, wodurch der typische und so geschätzte leicht changierende Charakter des Wildleders entsteht.

Ausführungsbeispiel

In einer Vorrichtung, wie sie in Fig. 1 dargestellt ist, wurde eine Materialbahn aus Vliesstoff behandelt. Die Materialbahn war vorher in an sich bekannter Weise mit einer Flockschicht aus Viskosefasern mit einem Titer von 0,9 detex und einer Faserlänge 0,5 mm, überzogen worden.

Die Materialbahn wurde mit einer Geschwindigkeit von 4 m/min durch die Behandlungs-Kammer 10 geführt. Die Länge der Behandlungs-Kammer betrug 1 m ; die Kammer war in fünf in Laufrichtung hintereinander angeordnete Teilkammern unterteilt. Die Behandlungsdauer betrug demnach 60 : 4 = 15 Sek.

Die Länge der Behandlungs-Kammer war, wie gesagt, 1 000 mm ; ihre Breite war 1 800 mm und ihre Höhe 60 mm. Die fünf Teilkammern waren mit je 80 Kugeln gefüllt. Der Durchmesser der Kugeln betrug 45 mm, die Shore-A-Härte 60°. Das Gewicht der Kugeln betrug jeweils 50 g. Die Arbeitsfrequenz der Vibrator-Anordnung wurde auf 40 Hz eingestellt, wobei, nach der Lautstärke der prasselnden Kugeln zu schließen, die Resonanzfrequenz erreicht war.

Nach der Behandlung zeigte die Bahn ein wildlederartiges, glattes Aussehen. Beim Überstreichen mit der Hand änderte sich in typischer Weise das Lichtreflektionsvermögen. Unter dem Mikroskop zeigte sich, daß die fast senkrecht aus der Oberfläche austretenden Fäserchen in Richtung der Bahnebene umgelegt waren.

**Patentansprüche**

1. Verfahren zum Herstellen von leicht und unregelmäßig strukturierten beflockten Oberflächen durch Beschichten der Oberfläche mit Klebstoff, Beflocken mit kurzen Textilfasern, vorzugsweise im elektrostatischen Feld, so daß die Textilfasern in senkrechter oder annähernd senkrechter Stellung aufgebracht werden, Aushärten des Klebstoffes und mechanischer Deformation der Flockschicht (6), der derart durchgeführt wird, daß die Textilfasern umgebogen werden und in der umgebogenen Lage liegen bleiben, dadurch gekennzeichnet, daß die Flockschicht durch Aufprallenlassen einer Vielzahl von Kugeln (13) aus rückprallelastischem Werkstoff deformiert wird.

2. Verfahren nach Anspruch 1, dadurch gekennzeichnet, daß eine Flockschicht (6) aus regenerierter Zellulose mit einer Faserlänge von 0,35-0,90 mm, vorzugsweise 0,5 mm und Kugeln (13) aus rückprallelastischem Werkstoff mit einer Härte von 50°-70° SHA (A-Shore) verwendet werden.

3. Verfahren nach Anspruch 1 oder 2, dadurch gekennzeichnet, daß Kugeln (13) aus einer Werkstoff-Kombination aus Polyethylen niedriger Dichte, Polyvinylacetat und einem Ionomer verwendet werden.

4. Verfahren nach Anspruch 1, 2 oder 3, dadurch gekennzeichnet, daß die Behandlungszeit der Flockschicht (6) mit den aufprallenden Kugeln 10-20 Sekunden beträgt.

5. Vorrichtung zur Durchführung des Verfahrens nach Anspruch 1, gekennzeichnet durch folgende Merkmale :

a) Einer Trägerbahn (1) für die zu behandelnde, oberflächlich beflockte Materialbahn (5) ;

b) unterhalb der Trägerbahn (1) befindet sich eine Vibrator-Anordnung (7), welche die Trägerbahn mitsamt der darauf angeordneten Materialbahn in Schwingungen versetzt ;

c) oberhalb der Trägerbahn (1) und der darauf angeordneten Materialbahn (5) befindet sich eine Behandlungs-Kammer (10) mit seitlichen Begrenzungswänden (11) sowie einer Pralldecke (12) ;

d) innerhalb der Behandlungs-Kammer (10) befindet sich eine Vielzahl von Kugeln (13) aus rückprallelastischem Werkstoff.

6. Vorrichtung nach Anspruch 5, dadurch gekennzeichnet, daß die Vibrator-Anordnung (7) ein elektromagnetischer Rüttler mit einer Arbeitsfrequenz von 20-50 Hz ist.

7. Vorrichtung nach Anspruch 5, dadurch gekennzeichnet, daß die Vibrator-Anordnung (7) aus in Laufrichtung der Trägerbahn (1) hintereinander angeordneten und sich quer- zur Laufrichtung erstreckenden, drehbaren Mehrkant-Profilstäben (9) besteht.

8. Vorrichtung nach Anspruch 5, 6 oder 7, dadurch gekennzeichnet, daß die Behandlungs-Kammer (10) in mehrere in Laufrichtung der Trägerbahn (1) hintereinander angeordnete Teilkammern unterteilt ist.

9. Vorrichtung nach Anspruch 5, 6, 7 oder 8, dadurch gekennzeichnet, daß sich in jeder Teilkammer mehrere Kugeln (13) befinden.

10. Vorrichtung nach wenigstens einem der Ansprüche 5 bis 9, dadurch gekennzeichnet, daß die Kugeln (13) einen Durchmesser von 35-50 mm und ein Gewicht von 40-60 g aufweisen.

11. Vorrichtung nach wenigstens einem der Ansprüche 5 bis 10 dadurch gekennzeichnet, daß die Behandlungs-Kammer (10) eine Länge von 1 000 mm, eine Breite von 1 800 mm und eine Höhe von 60 mm aufweist, daß sie über die Länge in fünf Teilkammern unterteilt ist und daß jede Teilkammer etwa 80 Kugeln enthält.

**Claims**

1. Process for preparing lightly and irregularly structured flocked surfaces by coating the surface with adhesive, flocking with short textile fibres, preferably in an electrostatic field, so that the textile fibres are applied in a vertical or approximately vertical position, curing the adhesive and mechanically deforming the flocked layer (6), which is carried out in such a way that the textile fibres are bent over and stay in the bent-over position, characterized in that the flocked layer is deformed by allowing a plurality of balls (13) which are made of rebound-resilient material to rebound thereon.

2. Process according to claim 1, characterized in that a flocked layer (6) comprising regenerated cellulose having a fibre length of 0.35-0.90 mm, preferably 0.5 mm, and balls (13) made of a rebound-resilient material having a Shore A hardness of 50°-70° are used.

3. Process according to claim 1 or 2, characterized in that balls (13) made of a material combination of polyethylene of low density, polyvinyl acetate and an ionomer are used.

4. Process according to claim 1, 2 or 3, characterized in that the treatment time of the flocked layer (6) with the rebounding balls is 10-20 seconds.

5. Apparatus for carrying out the process according to claim 1, characterized by the following features :

a) A carrier web (1) for the surface-flocked material web (5) which is to be treated ;

b) beneath the carrier web (1) there is a vibrator arrangement (7) which sets the carrier web in vibration together with the material web arranged thereon ;

c) above the carrier web (1) and the material web (5) arranged thereon there is a treatment chamber (10) with lateral confining walls (11) and a rebound ceiling (12) ;

d) within the treatment chamber (10) there is a plurality of balls (13) made of rebound-resilient material.

6. Apparatus according to claim 5, characterized in that the vibrator arrangement (7) is an electromagnetic riddler having in operating frequency of 20-50 Hz.

7. Apparatus according to claim 5, characterized in that the vibrator arrangement (7) consists of rotatable rods (9) which are polygonal in cross-section, which are arranged one behind the other in the running direction of the carrier web (1) and which extend transversely to the running direction.

8. Apparatus according to claim 5, 6 or 7, characterized in that the treatment chamber (10) is subdivided into a plurality of sub-chambers which are arranged one behind the other in the running direction of the carrier web (1).

9. Apparatus according to claim 5, 6, 7 or 8, characterized in that every sub-chamber contains a plurality of balls (13).

10. Apparatus according to at least one of claims 5 to 9, characterized in that the balls (13) have a diameter of 35-50 mm and a weight of 40-60 g.

11. Apparatus according to at least one of claims 5 to 10 characterized in that the treatment chamber (10) has a length of 1 000 mm, a width of 1 800 mm and a height of 60 mm and is subdivided along the length into five sub-chambers, each sub-chamber containing about 80 balls.

## Revendications

1. Procédé pour fabriquer des surfaces floquées structurées faiblement et irrégulièrement, par recouvrement de la surface d'une couche d'adhésif, flocage avec des fibres textiles courtes, de préférence dans un champ électrostatique, de manière que les fibres soient appliquées perpendiculairement ou à peu près perpendiculairement sur la surface, durcissement de l'adhésif et déformation mécanique de la couche de fibres (6), déformation qui est effectuée de manière que les fibres soient recourbées et conservent ensuite la position recourbée, caractérisé en ce que l'on déforme la couche de fibres en produisant l'impact, sur cette couche, d'un grand nombre de boules (13) faites d'un matériau doté d'élasticité de rebondissement.

2. Procédé selon la revendication 1, caractérisé en ce que l'on utilise une couche de fibres (6) de cellulose régénérée, avec une longueur de 0,35-0,90 mm, de préférence de 0,5 mm, et des boules (13) d'un matériau, doté d'élasticité de rebondissement, ayant une dureté de 50°-70° ShA (Shore A).

3. Procédé selon la revendication 1 ou 2, caractérisé en ce que l'on utilise des boules (13) faites d'un matériau constituant une combinaison de polyéthylène basse densité, acétate de polyvinyle et d'un ionomère.

4. Procédé selon la revendication 1, 2 ou 3, caractérisé en ce que le temps de traitement des couches de fibres (6) avec les boules rebondissantes est compris entre 10 et 20 secondes.

5. Dispositif pour la mise en œuvre du procédé selon la revendication 1, caractérisé en ce que :

a) il comprend une bande de support (1) pour la pièce à traiter (5) dont la surface est floquée ;

b) un dispositif de vibration (7) est placé sous la bande de support (1) pour mettre cette bande et la pièce à traiter qu'elle porte en vibration ;

c) au-dessus de la bande support (1) et la pièce à traiter (5) portée par elle, se trouve une chambre de traitement (10) possédant des parois de délimitation latérales (11) et une paroi supérieure (12) formant un toit de rebondissement ;

d) la chambre de traitement (10) contient un grand nombre de boules (13) faites d'un matériau doté d'élasticité de rebondissement.

6. Dispositif selon la revendication 5, caractérisé en ce que le dispositif de vibration (7) est un vibreur électromagnétique avec une fréquence de travail de 20-50 Hz.

7. Dispositif selon la revendication 5, caractérisé en ce que le dispositif de vibration (7) est constitué de barres profilées polygonales (9) montées rotatives les unes derrière les autres dans le sens du défilement de la bande support (1) et orientées transversalement au sens de défilement.

8. Dispositif selon la revendication 5, 6 ou 7, caractérisé en ce que la chambre de traitement (10) est partagée en plusieurs compartiments qui se suivent dans le sens de défilement de la bande support (1).

9. Dispositif selon la revendication 5, 6, 7 ou 8, caractérisé en ce que chaque compartiment contient plusieurs boules (13).

10. Dispositif selon au moins une des revendications 5 à 9, caractérisé en ce que les boules (13) ont un diamètre de 35-50 mm et un poids de 40-60 g.

11. Dispositif selon au moins une des revendications 5 à 10, caractérisé en ce que la chambre de traitement (10) possède une longueur de 1 000 mm, une largeur de 1 800 mm et une hauteur de 60 mm, qu'elle est partagée, dans le sens de la longueur, en cinq compartiments et que chaque compartiment contient environ 80 boules.

**Fig.1**

**Fig.2**